# EUROPÄISCHE PATENTSCHRIFT

(11) **EP 0 428 001 B1**
(45) Veröffentlichungstag und Bekanntmachung des Hinweises auf die Patenterteilung: **27.07.1994**
(21) Anmeldenummer: 90120760.5
(22) Anmeldetag: 30.10.1990
(51) Int. Cl.: B60R 13/04, B29C 65/00

(54) **Profilleiste, insbesondere für Fahrzeuge**
Moulding, in particular for vehicles
Profilé, en particulier pour véhicules

(30) Priorität: 11.11.1989 DE 3937561
(43) Veröffentlichungstag der Anmeldung: 22.05.1991
(73) Patentinhaber: Gebr. Happich GmbH, D-42097 Wuppertal (DE)
(72) Erfinder: Irrgang, Manfred, W-5600 Wuppertal 1 (DE)

(56) Entgegenhaltungen:
- EP-A- 0 282 918
- DE-A- 3 633 932
- GB-A- 2 072 103
- US-A- 4 745 665

## Beschreibung

Die Erfindung bezieht sich auf eine Profilleiste, insbesondere für Fahrzeuge, mit geschlossenen übergangslos angeformten Enden, die als Kunststoff-Spritzgußteil ausgeführt ist und eine integrierte Armierung aufweist, die aus zumindest einem Metallband besteht.

Profilleisten der gattungsgemäßen Art sind im allgemeinen mit einer Armierung versehen, der im wesentlichen die Aufgabe zufällt, dem hohen thermischen Ausdehnungskoeffizient der üblichen Kunststoffmaterialien, der bei den im Freien üblicherweise auftretenden Temperaturdifferenzen eine Längenveränderung der Leisten gegenüber dem Karosserieblech verursachen kann, entgegenzuwirken.

Die Verbindung zwischen dem Kunststoffmaterial der Leisten und dem in der Regel metallischen Armierungsmaterial bereitet in der Praxis oftmals Schwierigkeiten und kostenaufwendige Maßnahmen. So beschreibt z.B. die DE-C2- 31 30 586 ein Verfahren zum Herstellen einer Profilleiste, nach dem ein spritzgegossener Kunststoff-Profilleistenkörper separat hergestellt wird, ein z.B. aus rollgeformten Stahlblech bestehender Armierungskörper mit einem Haftvermittlerauftrag versehen wird, der Kunststoff-Profilleistenkörper mit dem Armierungskörper zusammengefügt wird und sodann im Formnest einer Fügeform der Haftvermittler induktiv erwärmt wird, um den Haftvermittler zu aktivieren und die unter Anpreßdruck aneinanderliegenden Teile miteinander zu verbinden.

In der DE-C2- 31 16 339 ist zur Herstellung von Profilleisten ein Verfahren beschrieben, wonach vorgesehen ist, daß eine in ein Formnest eingelegte, mit Primer und Haftvermittler beschichtete, aus Edelstahl, Aluminium oder Hart-PVC gefertigte, gegebenenfalls vorerwärmte Profilleiste in einer beheizten Spritzgießform mit PVC ummantelt und durch die Wärmeabgabe der eingespritzten Kunststoffmasse der Haftvermittler zumindest teilweise aktiviert wird. Für die Herstellung solcher Profilleisten ist also eine äußerst aufwendige und kostenintensive Vorbehandlung der Armierungen erforderlich. Letzteres gilt auch für den Gegenstand nach der DE-A1- 38 22 399, welcher sich auf ein selbsttragendes Bauteil zum Verkleiden, Verzieren, Schutz und/oder Abdichten von Gehäusen oder Karosserien mit wenigstens einem übergangslos angeformten axialen Ende, bestehend aus einem leisten- oder plattenförmigen Kunststoffkörper, der mit Stegen dem Gehäuse anliegt und der eine integrierte Armierung aus hartem Werkstoff sowie weichelastische Anlageelemente aufweist, bezieht. Bei diesem Gegenstand ist vorgesehen, daß die Armierung aus schmalen Leisten aus mit einem harten Werkstoff beschichteten Metallblech, aus einem mineralfaserverstärkten oder aus einem harten Kunststoff besteht, die an der Innenseite der dem Gehäuse od. dgl. anliegenden Stege des Bauteils stoffschlüssig mit diesem verbunden sind und die zumindest eine an dem Gehäuse od. dgl. anliegende Lippe aus weichelastischem Werkstoff aufweisen, wobei die Armierungsleisten durch Extrudieren hergestellt sind und der Kunststoffkörper an die Armierungsleisten angespritzt ist.

Der vorliegenden Erfindung liegt nun die Aufgabe zugrunde, eine Profilleiste der eingangs genannten Art einfacher, insbesondere aber auch preiswerter zu gestalten und dabei sicherzustellen, daß eine zuverlässige Verankerung der Armierung im Kunststoffmaterial der Profilleiste gewährleistet ist. Zudem soll eine Vereinfachung des Recycling erreicht werden.

Zur Lösung dieser Aufgabe ist erfindungsgemäß vorgesehen, daß das zumindest eine Metallband eine Vielzahl freigeschnittener in Reihe hintereinander angeordneter Zungen aufweist, daß die Zungen jeweils durch zwei. parallel mit Abstand zueinander ausgeführte Freischnitte gebildet sind, daß die Zungen teilweise aus der Metallbandebene herausgeformt sind, und daß unverformte und aus der Metallbandebene herausgeformte Zungen einander abwechseln, um zwischen den unverformten und verformten Zungen jeweils einen Durchflußkanal für das Kunststoffmaterial bei der Herstellung der Profilleiste zu bilden.

Durch diese erfindungsgemäße Maßnahme wird ein inniger Verbund zwischen der Armierung einerseits und dem Kunststoffmaterial der Profilleiste andererseits erreicht, und zwar ohne eine aufwendige Behandlung des Metallbandes mit Primer, Haftvermittler u. dgl.. Das Metallband wird lediglich in das Formnest einer Spritzgußform eingelegt und durch Einspritzen von Kunststoffmaterial in das Formnest im Kunststoffmaterial verankert. Dabei ist es wesentlich, daß das Metallband nicht nur freigeschnittene Zungen aufweist sondern, daß die Zungen auch aus der Metallbandebene herausgeformt sind. Die aus der Metallbandebene herausgeformten Zungen bilden nämlich die Auflagepunkte, -linien oder -flächen für das Metallband, im Formwerkzeug, wodurch es von seiner Stützfläche im Formnest zum weitaus überwiegenden Teil beabstandet ist und dadurch auch innerhalb des Profilleistenkörpers eine günstige Anordnung, wie man sie bei extrudierten Profilleisten kennt, erfährt. Das Metallband der erfindungsgemäßen Profilleiste ist somit nahezu vollständig im Kunststoffmaterial der Profilleiste eingebettet und vom Kunststoffmaterial umhüllt und vermag daher seiner Armierungsaufgabe, insbesondere im Hinblick darauf, eine Dimensionsstabilität der Profilleiste zu bewirken, in optimaler Weise zu genügen, zumal sich zufolge der freigeschnittenen und aus der Metallebene herausgeformten Zungen eine starre Verzahnung zwischen dem Metallband einerseits und dem Kunststoffmaterial andererseits ergibt. Durch die Erfindung ergeben sich also verschiedene Vorteile. Zunächst erfolgt nur eine mechanische Verbindung des Metallbandes zum Polymer. Es erfolgt eine Sicherstellung der Längengenauigkeit, d. h. volle Aufnahme der Verarbeitungsschwindung von ca. 10 mm/m. Es erfolgt weiterhin eine Stabilisierungswirkung (auch in Querrichtung), um profilbedingte Massenungleichgewichte (Spannungen) aufzufangen. Es läßt sich eine Spannungsneutralität zwischen -35° und +120° Celsius erzielen. Ein besonderer Kostenvorteil entsteht durch den Entfall der bisher als zwingend erforderlich erachteten Haftvermittler-Beschichtung; denn nach dem Stand der Technik wurde bisher für die Verbindung von Metall zu einen Polymer ein entsprechend geeigneter Haftvermittler eingesetzt, der durch Wärmeaktivierung zu einer stoffschlüssigen Verbindung führte. Eine stoffschlüssige Verbindung erschwert jedoch das Recycling; zudem fallen Schadstoffe und Entsorgungsprobleme an. Da aufgrund der Erfindung auf Haftvermittler verzichtet werden kann, ergibt sich eine einfache Möglichkeit des Recyclings, wobei z.B. durch Stromaufnahme des Metallbandes im Grenzbereich des Polymers eine Schmelze erzielt wird, wonach das Metallband leicht aus den Thermoplasten gelöst werden kann. Es ergibt sich als die Möglichkeit einer nahezu rückstandsfreien Trennung zwischen dem Kunststoffmaterial und dem Metallband der Profilleiste.

In Ausgestaltung der Erfindung kann vorgesehen sein, daß die Zungen jeweils durch zwei parallel mit Abstand zueinander ausgeführte Freischnitte gebildet sind. Dabei sind die Freischnitte vorzugsweise quer zur Metallbandlängsachse ausgeführt, wobei sie jeweils an einer Längskante beginnen und vor der dieser gegenüberliegenden Längskante enden. Die von der einen Längskante ausgehenden Zungen können den von der anderen Längskante ausgehenden Zungen gegenüberliegen oder alternativ auch gegeneinander versetzt sein.

Bevorzugterweise weist das zumindest eine Metallband parallel nebeneinander verlaufende, an den Längsrändern austretende Einschnitte auf, die so ausgeführt sind, daß ein etwa mittig durchlaufender einschnittsfreier Steg verbleibt, der beidseitig durch in Reihe nebeneinander angeordnete Zungen flankiert ist. Das zumindest eine Metallband weist bevorzugterweise einerseits unverformte und andererseits aus der Metallbandebene herausgeformte Zungen auf.

Dabei können bei in Reihe hintereinander angeordneten Zungen unverformte und aus der Metallbandebene herausgeformte Zungen einander abwechseln. Insbesondere können die aus der Metallbandebene herausgeformten Zungen jeweils einen, etwa parallel zur Metallbandebene verlaufenden Abschnitt aufweisen, der der ihm benachbarten Fläche des Metallbandes beabstandet ist, um einen Durchfluß-Spalt oder -Kanäle für das Kunststoffmaterial der Profilleiste zu bilden.

Gemäß einer besonderen und daher bevorzugten Ausfürungsform der Erfindung ist vorgesehen, daß die aus der Metallbandebene herausgeformten Zungen jeweils einen, etwa parallel zur Metallbandebene verlaufenden, wellenförmig ausgebildeten Abschnitt aufweisen und daß zwischen den Wellentälern und den Wellenbergen vom Kunststoffmaterial der Profilleiste durchsetzte Kanäle ausgebildet sind. Dabei sollen zwecks Erhöhung der Stabilität die Wellenberge jeweils seitlich durch unverformte Zungen abgestützt sein.

Es kann ferner vorgesehen sein, daß die Profilleiste einen etwa rechteckigen Querschnitt, einen der Anschlußfläche angepaßten Boden und abgerundete Kanten aufweist. Diese Ausführungsform ist besonders für flache, wenig auftragende Profilleisten geeignet.

Nach einer anderen Ausführungsform kann die Profilleiste, im Querschnitt gesehen, aber auch hutförmig ausgebildet sein und einen Schenkel, zwei mit dem Schenkel verbundene Stege und zwei nach außen abstehende Flansche, von denen jeweils einer mit einem freien Stegende verbunden ist, umfassen, wobei sowohl im Sohenkel als auch in den Flanschen jeweils ein Metallband eingelagert ist. Diese Ausführungsform bietet sich für großvolumige Profilleisten an und trägt dabei auch der allgemeinen Forderung, den Materialeinsatz zu begrenzen, Rechnung.

Die erfindungsgemäße Profilleiste kann bodenseitig mit zumindest einem Befestigungsmittel, wie ein Doppelklebeband, ausgerüstet sein womit eine schnell und einfach durchzuführende Montage ermöglicht wird.

Gemäß einer weiteren Ausführungsform der Erfindung kann die Profilleiste zwei im Abstand zueinander verlaufende rückseitige Stege aufweisen und in der Profilleiste können zwei Metallbänder eingelagert sein, die auch die Stege aussteifen. Für diese Ausführungsform der erfindungsgemäßen Profilleiste bietet sich der Einsatz einer Weiterbildung der Erfindung an, wonach vorgesehen ist, daß zumindest ein Metallband als Winkelprofil ausgebildet ist, wobei einer der Winkelschenkel mit abstandsfrei nebeneinander angeordneten Zungen, bei denen unverformte und aus der Schenkelebene herausgeformte Zungen einander abwechseln, ausgebildet ist, während der andere Winkelschenkel in Reine nebeneinander angeordnete Zungen aufweist, die durch Ausklinkungen des Metallbandes gebildet sind. Dabei sind auch die ausgeklinkten Zungen verformt, wobei sie wahlweise gekrümmt, endseitig abgewinkelt oder wellenförmig verlaufend ausgebildet sind

Ausführungsbeispiele der Erfindung werden nachfolgend anhand der Zeichnung näher erläutert. Es zeigen:
- Fig. 1: den Schnitt durch den Endbereich einer Profilleiste gemäß einer ersten Ausführungsform,
- Fig. 2: die Armierung der Profilleiste nach Fig. 1 im noch unverformten Zustand,
- Fig. 3: die Armierung nach Fig. 2 im verformten Zustand,
- Fig. 4: den Schnitt durch eine Profilleiste gemäß einer zweiten Ausführungsform,
- Fig. 5: die Armierung der Profilleiste nach Fig. 4 im noch unverformten Zustand,
- Fig. 6: die Armierung nach Fig. 5 im verformten Zustand,
- Fig. 7: den Schnitt durch eine Profilleiste gemäß einer dritten Ausführungsform,
- Fig. 8: eine Armierung der Profilleiste nach Fig. 7 im verformten Zustand,
- Fig. 9: eine Armierung der Profilleiste nach Fig. 7 im verformten Zustand und in einer gegenüber Fig. 8 abgewandelten Ausführungsform,
- Fig. 10: den Schnitt durch eine Profilleiste gemäß einer vierten Ausführungsform,
- Fig. 11: die Armierung der Profilleiste nach Fig. 10 im verformten Zustand und
- Fig. 12: einen Schnitt durch eine Vorrichtung zum Herstellen einer Profilleiste.

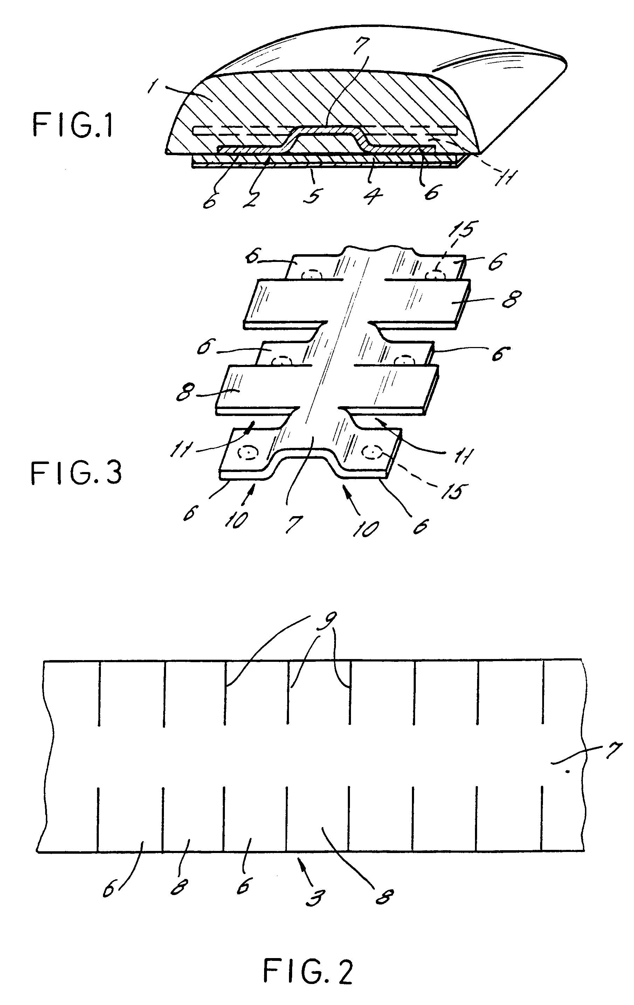

Fig. 1 zeigt einen Querschnitt durch den Endbereich einer Profilleiste, wie sie aus Schutz- und/oder Verschönerungszwecken üblicherweise außenseitig an Fahrzeugkarosserien angebracht wird. Der gewählte Querschnitt ist willkürlich und kann, den jeweiligen Kundenwünschen entsprechend, in vielfältiger Weise modifiziert oder abgeändert werden.

Die Profilleiste nach Fig. 1 besteht aus einem im Spritzgußverfahren hergestellten Profilkörper 1 und weist eine integrierte Armierung 2 auf, die aus einem Metallband 3 gebildet ist. Die Profilleiste trägt bodenseitig ein Doppelklebeband 4, das durch einen abziehbaren Schutzstreifen 5 abgedeckt ist.

Die Armierung 2 wird, wie erwähnt, aus dem Metallband 3 gebildet. Dabei ist wesentlich, daß das Metallband 3 eine Vielzahl freigeschnittener und aus der Metallbandebene herausgeformter Zungen 6 aufweist. Die Armierung 2 besteht also aus einem prägeschnittbearbeiteten Metallband 3 mit einem mittigen, in Längsrichtung durchlaufenden Steg 7, an dem beidseitig freigeschnittene, senkrecht zum Steg 7 ausgerichtete Zungen praktisch abstandsfrei sitzen, wobei die verformten Zungen mit 6 und die unverformten Zungen mit 8 bezeichnet sind. Die abstandsfreie Anordnung der Zungen 6 und 8 nebeneinander ergibt sich dadurch, daß diese lediglich durch einen Prägeschnitt und nicht durch eine Stanzöffnung voneinander getrennt sind. Bei der Herstellung der Armierung 2 wird demnach das Metallband 3 im Durchlaufverfahren mit Prägeschnitten 9 versehen, wodurch sich der durchlaufende Steg 7 und die beidseitig daran sitzenden Zungen 6, 8 ergeben. Das Metallband 3 wird mit einem Folgewerkzeug bearbeitet, welches so ausgebildet ist, daß sowohl die Prägeschnitte 9 als auch die Verformungen der Zungen 6 vorgesehen werden können. Bei den in den Zeichnungen gezeigten Ausführungsbeispielen, sind jeweils in Reihe hintereinander angeordnete Zungen gleicher Ausbildung vorgesehen, wobei sich jeweils unverformte Zungen 8 und aus der Metallbandebene herausgeformte Zungen 6 einander abwechseln, d. h. jeder verformten Zunge 6 folgt eine unverformte Zunge 8.

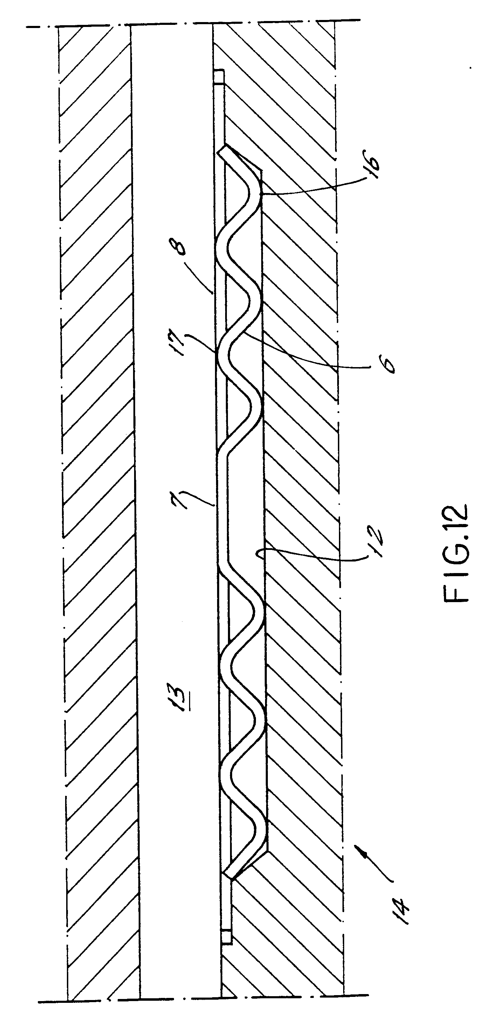

Beim Ausführungsbeispiel nach Fig. 1 bis 3 weisen die aus der Metallbandebene herausgeformten Zungen 6 jeweils einen etwa parallel zur Metallbandebene verlaufenden Abschnitt 10 auf, der der ihm benachbarten Fläche des Metallbandes 3 beabstandet ist, um beim Spritzgießen einen Durchflußspalt 11 oder Kanal für das Kunststoffmaterial der Profilleiste zu bilden. Die Abschnitte 10 sind dazu bestimmt, sich auf einer Wandung 12 im Formnest 13 einer Spritzgußform 14 (Fig. 12) abzustützen, wodurch die Zungen 8 und der Steg 7 der Armierung 2 eine von der Wandung 12 entfernte Anordnung im Formnest 13 der Spritzgußform 14 und eine entsprechend weit vom Boden des Profilkörpers 1 entfernte Anordnung im Profilkörper 1 (Fig. 1) finden. Anstelle einer flächigen Abstützung kann auch eine punktuelle Abstützung dadurch erfolgen, daß die Abschnitte 10 mit kalottenförmigen Einprägungen 15 ausgebildet werden.

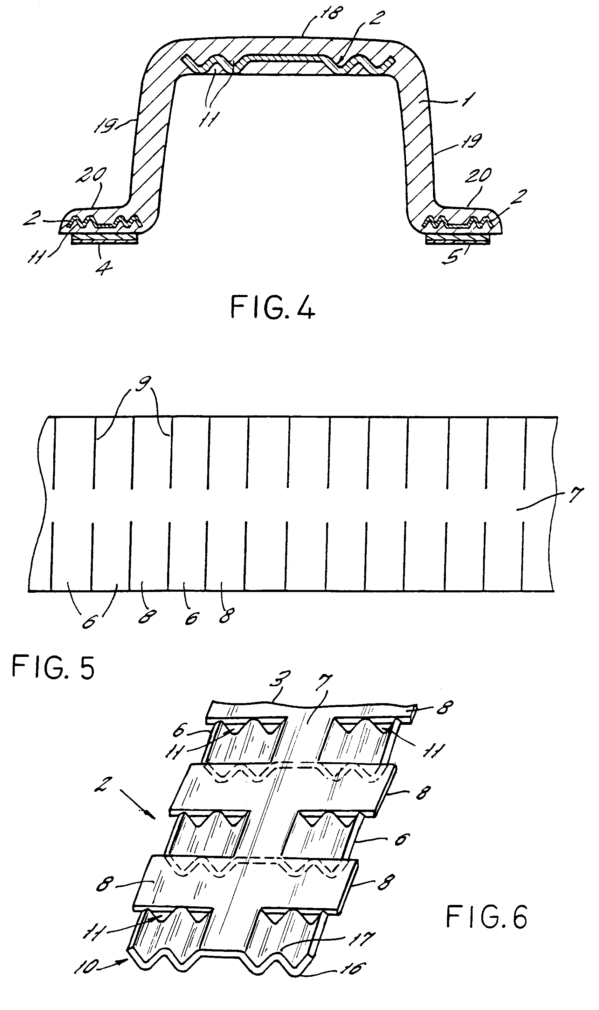

Beim Ausführungsbeispiel nach Fig. 4 bis 6 ist eine Profilleiste mit einem Profilkörper 1 gezeigt, der einen hutförmigen Querschnitt aufweist. Der Profilkörper 1 ist hier mit drei Armierungen 2 ausgerüstet, wobei die Armierungen 2 eine, insbesondere aus Fig. 6 ersichtliche Ausbildung aufweisen können.

Beim Ausführungsbeispiel nach Fig. 4 bis 6 weisen die aus der Metallbandebene herausgeformten Zungen 6 jeweils einen etwa parallel zur Metallbandebene verlaufenden, wellenförmig ausgebildeten Abschnitt 10 auf und zwischen den Wellentälern 16 und den Wellenbergen 17 sind vom Kunststoffmaterial der Profilleiste durchsetzte Kanäle 11 ausgebildet. Zwecks Erhöhung der Stabilität ist zudem vorgesehen, daß die Wellenberge 17 der Zungen 6 seitlich durch die unverformten Zungen 8 abgestützt sind. Die Wellentäler 16 bilden die Auflagelinien, mit denen die Armierung 2 eine Abstützung auf der Wandung 12 im Formnest 13 der Kunststoff-Spritzgußform 14 findet.

Die hutförmig ausgebildete Profilleiste nach Fig. 4 umfaßt einen Schenkel 18, zwei mit diesem verbundene Stege 19 und zwei nach außen abstehende Flansche 20, von denen jeweils einer mit einem freien Stegende verbunden ist. Sowohl im Schenkel 18 als auch in den Flanschen 20 ist jeweils ein Metallband 3 eingelagert. An der Unterseite jedes Flanschs 20 ist ein Doppelklebeband 4 mit Schutzstreifen 5 angeordnet.

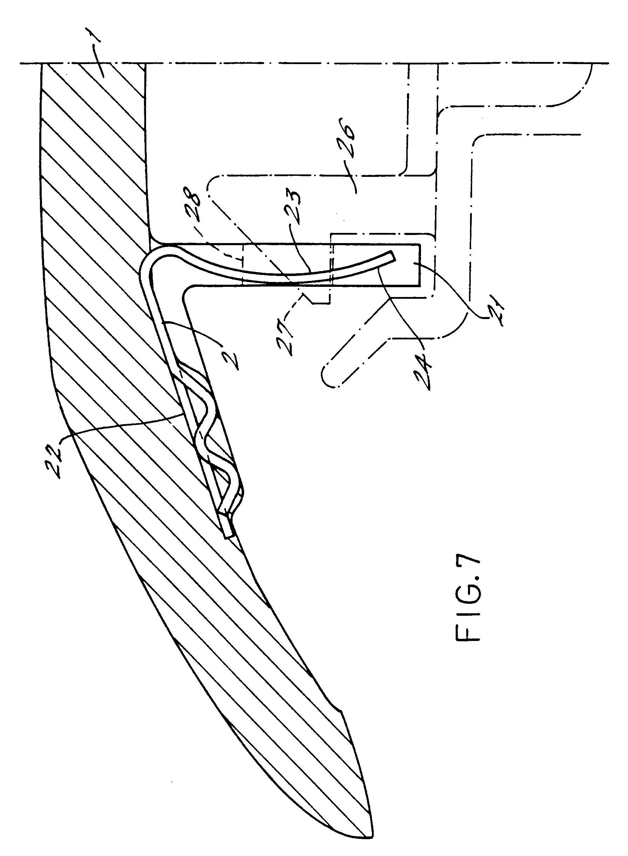

Die nur halbseitig dargestellte Profilleiste nach Fig. 7 (die andere Hälfte ist zur gezeigten symmetrisch) weist rückseitig zwei angeformte Stege 21 auf, von denen nur einer dargestellt ist. Die Armierung 2 für die Profilleiste nach Fig. 7 ist als Winkelprofil ausgebildet. Dabei sitzt ein Winkelschenkel 22 im Hauptteil des Profilkörpers 1 und der andere Winkelschenkel 23 im Steg 21. Der Winkelschenkel 22 ist mit abstandsfrei nebeneinander angeordneten Zungen 6, 8, bei denen unverformte 8 und aus der Schenkelebene herausgeformte 6 einander abwechseln, ausgebildet. Die Verformung und die Anordnung der Zungen 6 und 8 zueinander, entspricht der Ausführungsform nach Fig. 6. Der zweite Winkelschenkel 23 des Metallbandes 3, weist ebenfalls in Reihe nebeneinander angeordnete Zungen auf, die mit 24 bezeichnet und durch randoffene Ausklinkungen 25 im Metallband 3 gebildet sind. Die Zungen 6, 8 einerseits und die Zungen 24 andererseits sind durch den durchlaufenden Steg 7 voneinander getrennt.

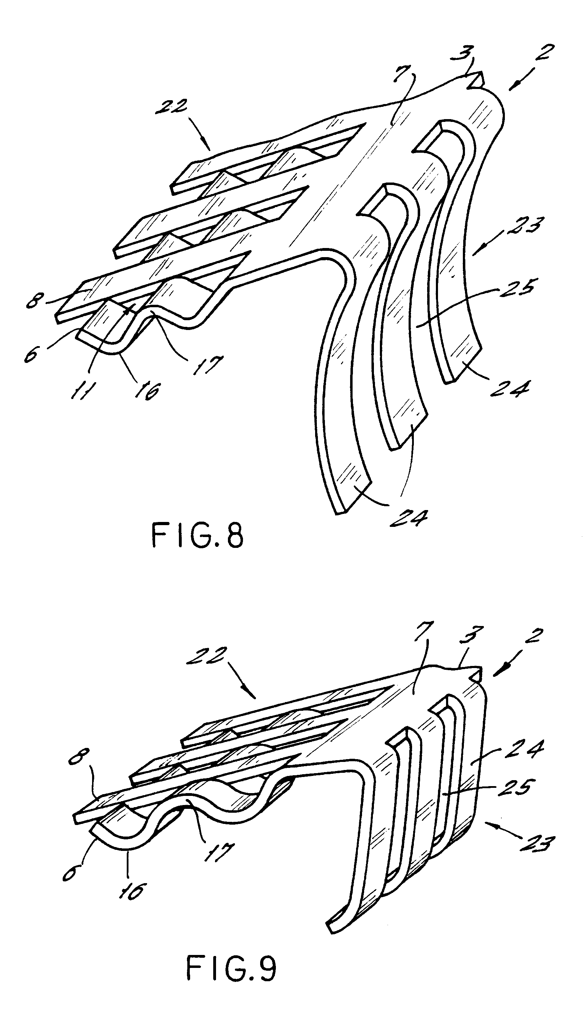

In den Fig. 8 und 9 ist in prespektivischer Darstellungsmanier gezeigt, wie die als Winkelprofile ausgebildeten Armierungen 2 für die Profilleiste nach Fig. 7 gestaltet sein können.

In Fig. 7 ist mit gestrichelten Linien auch eine Einbau-Situation gezeigt, wobei ein Klipselement 26 zu erkennen ist, das mit einer Klipsnase 27 eine Öffnung 28 im Steg 21 der Profilleiste durchsetzt. Die Öffnungen 28 sind über die Profillänge verteilt und so angeordnet, daß sie mit den Ausklinkungen 25 zusammenfallen.

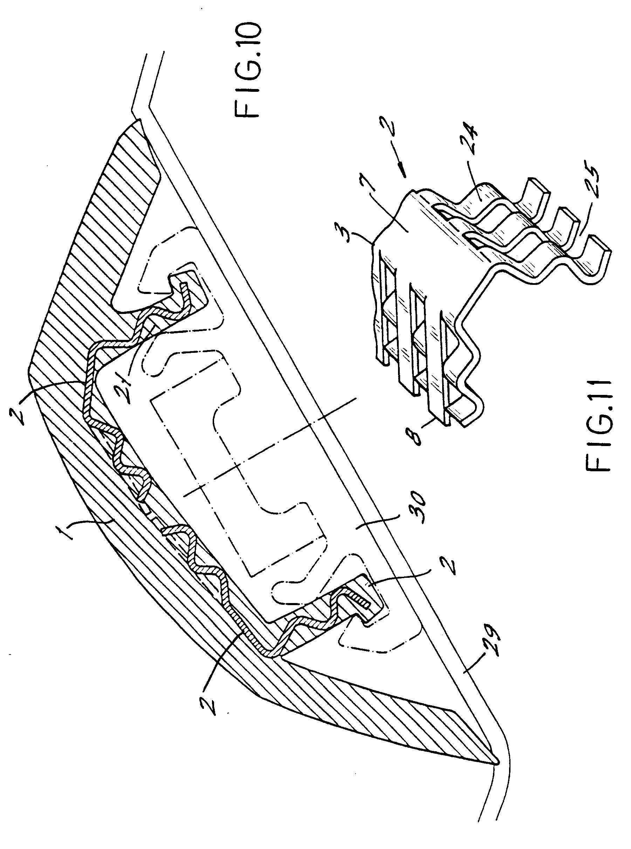

Fig. 10 zeigt eine Profilleiste, die an einer angedeuteten Karosseriewand 29 über Klipselemente 30 befestigt ist. Die Profilleiste nach Fig. 10 weist rückseitig angeformte Stege 21 auf, deren freie Enden nach außen hin verdickt sind, um eine formschlüssige Verbindung mit den Klipselementen bewirken zu können. Auch bei dieser Profilleiste sind wieder zwei Armierungen 2, die auch die Stege 21 versteifen vorgesehen. Die rechtsseitig in Fig. 10 angeordnete Armierung 2 ist in Fig. 11 zwecks besserer Verdeutlichung nochmals prespektivisch gezeigt. Auch hier sitzen links und rechts an dem durchlaufenden Steg 7 angebunden, die Zungen 6 und 8 einerseits und die Zungen 24 andererseits. Der Unterschied der Armierung 2 nach Fig. 10 und 11 gegenüber der nach den Fig. 7 bis 9 besteht im wesentlichen darin, daß auch die Zungen 24 wellenförmig verlaufend ausgebildet sind.

## Patentansprüche

1. Profilleiste, insbesondere für Fahrzeuge mit geschlossenen übergangslos angeformten Enden, die als Kunststoff-Spritzgußteil ausgeführt ist und eine integrierte Armierung (2) aufweist, die aus zumindest einem Metallband (3) besteht, dadurch gekennzeichnet, daß das zumindest eine Metallband (3) eine Vielzahl freigeschnittener in Reihe hintereinander angeordneter Zungen (6) aufweist, daß die Zungen (6) jeweils durch zwei. parallel mit Abstand zueinander ausgeführte Freischnitte (9) gebildet sind, daß die Zungen (6) teilweise aus der Metallbandebene herausgeformt sind, und daß unverformte (8) und aus der Metallbandebene herausgeformte Zungen (6) einander abwechseln, um zwischen den unverformten und verformten Zungen jeweils einen Durchflußkanal (11) für das Kunststoffmaterial bei der Herstellung der Profilleiste zu bilden.

2. Profilleiste nach Anspruch 1, dadurch gekennzeichnet, daß die Freischnitte (9) quer zur Metallband-Längsachse ausgeführt sind und jeweils an einer Längskante beginnen und vor der dieser gegenüberliegenden Längskante enden.

3. Profilleiste nach wenigstens einem der vorangegangenen Ansprüche, dadurch gekennzeichnet, daß die von der einen Längskante ausgehenden Zungen (6) den von der anderen Längskante ausgehenden Zungen (6) gegenüberliegen.

4. Profilleiste nach wenigstens einem der vorangegangenen Ansprüche, dadurch gekennzeichnet, daß die von der einen Längskante ausgehenden Zungen (6) gegenüber den von der anderen Längskante ausgehenden Zungen (6), in Längsrichtung des Metallbandes (3) gesehen, versetzt sind.

5. Profilleiste nach wenigstens einem der vorangegangenen Ansprüche, dadurch gekennzeichnet, daß das zumindest eine Metallband (3) parallel nebeneinander austretende Einschnitte (9) aufweist, die so ausgeführt sind , daß ein etwa mittig durchlaufender einschnittsfreier Steg (7) verbleibt, der beidseitig durch in Reihe nebeneinander angeordnete Zungen (6, 8) flankiert ist.

6. Profilleiste nach wenigstens einem der vorangegangenen Ansprüche, dadurch gekennzeichnet, daß bei in Reihe hintereinander angeordneten Zungen (6, 8) unverformte (8) und aus der Metallbandebene herausgeformte Zungen (6) einander abwechseln.

7. Profilleiste nach wenigstens einem der vorangegangenen Ansprüche, dadurch gekennzeichnet, daß die aus der Metallbandebene herausgeformten Zungen (6) jeweils eine, etwa parallel zur Metallbandebene verlaufenden, wellenförmig ausgebildeten Abschnitt (10) aufweisen und daß zwischen den Wellentälern (16) und den Wellenbergen (17) vom Kunststoffmaterial der Profilleiste durchsetzte Kanäle (11) ausgebildet sind.

8. Profilleiste nach Anspruch 7, dadurch gekennzeichnet, daß die Wellenberge (17) jeweils seitlich durch unverformte Zungen (8) abgestützt sind.

9. Profilleiste nach wenigstens einem der vorangegangenen Ansprüche, dadurch gekennzeichnet, daß dieselbe einen etwa rechteckigen Querschnitt, einen der Anschlußfläche angepaßten Boden und abgerundete Kanten aufweist.

10. Profilleiste nach wenigstens einem der vorangegangenen Ansprüche, dadurch gekennzeichnet, daß dieselbe, im Querschnitt gesehen, hutförmig ausgebildet ist und einen Schenkel (18), zwei mit dem Schenkel (18) verbundene Stege (19) und zwei nach außen abstehende Flansche (20), von denen jeweils einer mit einem freien Stegende verbunden ist, umfaßt und daß sowohl im Schenkel (18) als auch in den Flanschen (20) jeweils ein Metallband (3) eingelagert ist.

11. Profilleiste nach wenigstens einem der vorangegangenen Ansprüche, dadurch gekennzeichnet, daß die Profilleiste bodenseitig mit zumindest einem Befestigungsmittel, wie ein Doppelklebeband (4), ausgerüstet ist.

12. Profilleiste nach wenigstens einem der vorangegangenen Ansprüche, dadurch gekennzeichnet, daß dieselbe zwei im Abstand zueinander verlaufende rückseitige Stege (21) aufweist und daß in die Profilleiste zwei Metallbänder (3) eingelagert sind, die auch die Stege (21) aussteifen.

13. Profilleiste nach wenigstens einem der vorangegangenen Ansprüche, dadurch gekennzeichnet, daß zumindest ein Metallband (3) als Winkelprofil ausgebildet ist, wobei einer der Winkelschenkel (22) mit abstandsfrei nebeneinander angeordneten Zungen (6, 8), bei denen unverformte (8) und aus der Schenkelebene herausgeformte Zungen (6) einander abwechseln, ausgebildet ist, während der andere Winkelschenkel (23) in Reihe nebeneinander angeordnete Zungen (24) aufweist, die durch Ausklinkungen (25) des Metallbandes (3) gebildet sind.

14. Profilleiste nach Anspruch 13, dadurch gekennzeichnet , daß auch die Zungen 24 verformt sind.

15. Profilleiste nach Anspruch 13 oder 14, dadurch gekennzeichnet, daß die Zungen (24) gekrümmt, endseitig abgewinkelt oder wellenförmig verlaufend ausgebildet sind.

## Claims

1. A section strip, especially for vehicles with closed ends which are formed for continuity, which is constructed as a plastics material sprayed die casting and has an integrated reinforcement (2), which comprises at least one metal band (3), characterised in that the said at least one metal band (3) has a plurality of open cut tongues (6), arranged in series one behind the other, that the tongues (6) in each case are formed by two open cuts (9) made parallel to and spaced apart from each other, that the tongues (6) are partially bent out from the plane of the metal band and that unshaped tongues (8) and tongues (6) bent out from the metal band plane alternate each other, in order to form, between the unshaped and shaped tongues in each case, a through-flow canal (11) for the plastics material during the manufacture of the section strip.

2. A section strip according to Claim 1, characterised in that the open cuts (9) are carried out transversely to the longitudinal axis of the metal band and in each case begin on a longitudinal edge and terminate short of the longitudinal edge lying opposite thereto.

3. A section strip according to at least one of the preceding claims, characterised in that the tongues (6) proceeding from one longitudinal edge lie opposite the tongues (6) proceeding from the other longitudinal edge.

4. A section strip according to at least one of the preceding claims, characterised in that the tongues (6) proceeding from one longitudinal edge are staggered with respect to the tongues (6), proceeding from the other longitudinal edge, considered in longitudinal direction of the metal band (3).

5. A section strip according to at least one of the preceding claims, characterised in that at least one metal band (3) has indentations (9) extending in parallel adjacent to each other and which are constructed such that a stem (7) remains which is free of indentations and extends approximately centrally, and is flanked on both sides by tongues (6, 8) arranged adjacent to each other in series.

6. A section strip according to at least one of the preceding claims, characterised in that with tongues (6,8) arranged in series one behind the other, unshaped tongues (8) and tongues (6) bent out from the metal band plane, alternate with each other.

7. A section strip according to at least one of the preceding claims, characterised in that the tongues (6) bent out from the metal band plane in each case have a section (10) of corrugated construction extending approximately parallel to the metal band plane, and that between the wave troughs (16) and the wave peaks (17) canals (11) are constructed which are penetrated by the plastics material of the section strip.

8. A section strip according to Claim 7, characterised in that the wave peaks (17) are in each case supported laterally by unshaped tongues (8).

9. A section strip according to at least one of the preceding claims, characterised in that it has an approximately rectangular cross-section, a base matched to the connecting surface and rounded edges.

10. A section strip according to at least one of the preceding claims, characterised in that it is constructed in a hat shape, viewed in cross-section, and comprises a shank (18), two stems (19) connected with the shank (18) and two outwardly projecting flanges (20), one of which in each case is connected with a free stem end, and that a metal band (3) is embedded in each case both in the shank (18) and also in the flanges (20).

11. A section strip according to at least one of the preceding claims, characterised in that the section strip is equipped on the base side with at least one attachment means, such as a double adhesive tape (4).

12. A section strip according to at least one of the preceding claims, characterised in that it has two attachment parts (21) on the reverse side, extending at a distance from each other, and that two metal bands (3) are embedded into the section strip, which also reinforce the attachment parts (21).

13. A section strip according to at least one of the preceding claims, characterised in that at least one metal band (3) is constructed as an angle section, in which one of the angle shanks (22) is constructed with tongues (6, 8) arranged adjacent to each other without spacing, in which unshaped tongues (8) and tongues (6) bent out from the shank plane alternate with each other, whilst the other angle shank (23) has tongues (24) arranged adjacent to each other in series, which are formed by notches (25) of the metal band (3).

14. A section strip according to Claim 13, characterised in that the tongues (24) are also shaped.

15. 5. A section strip according to Claim 13 or Claim 14, characterised in that the tongues (24) are constructed so as to be curved, angled at the end side or extending in a wave shape.

## Revendications

1. Profilé en particulier pour véhicules automobiles avec extrémités fermées, forme d'un seul tenant, sans transition qui est réalisé sous la forme d'une pièce en matière plastique moulée par injection et présente un armature (2) intégrée qui est constituée d'au moins une bande métallique (3), caractérisé en ce qu'une bande métallique (3) au moins comporte plusieurs languettes (6) découpées, disposées en rangée l'une derrière l'autre, en ce que les languettes (6) sont formées chacune par deux découpes (9) parallèles et espacées, en ce que les languettes (6) sont en partie déformées pour être ressorties du plan de la bande métallique et en ce que des languettes non déformées (8) et des languettes (6) ressorties du plan de la bande métallique alternent les unes les autres pour former un canal de passage (11) entre les languettes non déformées et les languettes déformées, pour la matière plastique, lors de la fabrication du profilé.

2. Profilé selon la revendication 1, caractérisé en ce que les découpes (9) sont transversales à l'axe longitudinal de la bande métallique et commencent chacune sur un bord longitudinal et se terminent devant le bord longitudinal opposé à celui-ci.

3. Profilé selon l'une au moins des revendications précédentes, caractérisé en ce que les languettes (6) partant d'un bord longitudinal font face aux languettes (6) partant de l'autre bord longitudinal

4. Profilé selon l'une au moins des revendications précédentes, caractérisé en ce que les languettes (6) partant d'un bord longitudinal sont décalées, dans la direction longitudinale de la bande métallique (3), par rapport aux languettes (6) partant de l'autre bord longitudinal.

5. Profilé selon l'une au moins des revendications précédentes, caractérisé en ce qu'une bande métallique (3) au moins présente des entailles (9) sortant côte à côte et parallèles, qui sont réalisées de manière qu'il reste une âme (7) sans entaille s'étendant à peu près au centre, qui est flanquée des deux côtés par des languettes (6, 8) juxtaposées en rangée.

6. Profilé selon l'une au moins des revendications précédentes caractérisé en ce que dans le cas des languettes (6, 8) disposées en rangée les unes derrière les autres, alternent des languettes non déformées (8) et des languettes déformées (6) sortant du plan de la bande métallique.

7. Profilé selon l'une au moins des revendications précédentes, caractérisé en ce que les languettes déformées (6), sortant du plan de la bande métallique présentent chacune une partie (10) ondulée, à peu près parallèle au plan de la bande métallique et en ce qu'entre les creux (16) des ondulations et les sommets (17) des ondulations sont formés des canaux (11) traversés par la matière plastique du profilé.

8. Profilé selon la revendication 7, caractérisé en ce que les sommets (17) des ondulations sont soutenus chacun latéralement par des languettes non déformées (8).

9. Profilé selon l'une au moins des revendications précédentes, caractérisé en ce que celui-ci a une section transversale rectangulaire, un fond adapté à la surface de raccord et des bords arrondis.

10. Profilé selon l'une au moins des revendications précédentes, caractérisé en ce que celui-ci, vu en coupe transversale, a la forme d'un chapeau et présente une aile (18), deux cloisons (19) reliées à l'aile (18) et deux brides (20) faisant saillie vers l'extérieur dont une est reliée avec une extrémité libre de cloison et en ce qu'une bande métallique (3) est insérée dans l'aile (18) ainsi que dans les brides (20).

11. Profilé selon l'une au moins des revendications précédentes caractérisé en ce que le profilé est pourvu côté fond d'au moins un moyen de fixation, tel qu'une bande adhésive double face (4).

12. Profilé selon l'une au moins des revendications précédentes caractérisé en ce que celui-ci comporte deux cloisons (21) arrière espacées l'une de l'autre et en ce que dans le profilé sont insérées deux bandes métalliques (3) qui raidissent aussi les cloisons (21).

13. Profilé selon l'une au moins des revendications précédentes, caractérisé en ce qu'une bande métallique (3) au moins est conçue sous la forme d'une cornière, l'un des côtés (22) de la cornière étant pourvu de languettes (6, 8), juxtaposées non espacées parmi lesquelles alternent des languettes non déformées (8) et des languettes déformées (6) ressorties du plan du côté, tandis que l'autre côté (23) de la cornière présente des languettes (24) juxtaposées en rangée, qui sont formées par des encoches (25) découpées dans la bande métallique (3).

14. Profilé selon la revendication 13, caractérisé en ce que les languettes (24) aussi sont déformées.

15. Profilé selon la revendication 13 ou 14, caractérisé en ce que les languettes (24) sont courbées coudées aux extrémités ou ondulées.
